# EUROPEAN PATENT APPLICATION

(11) **EP 3 239 942 A1**
(43) Date of publication of application: **01.11.2017**
(21) Application number: 16180424.0
(22) Date of filing: 20.07.2016
(51) Int. Cl.: G07F 17/32

(54) **TOUCH CONTROL TYPE OBJECT GRABBING MACHINE**

(30) Priority: 27.04.2016 TW 105113172
(71) Applicant: Paokai Electronic Enterprise Co., Ltd., Kaohsiung City (TW)
(72) Inventor: WEI, Ming-Shan, Kaohsiung City (TW)
(74) Representative: Lang, Christian

(57) **Abstract**

A touch control type object grabbing machine includes a housing (1) having a chamber (11). A grabbing device (2) is mounted in the chamber (11). The grabbing device (2) includes an actuating unit (21) and a claw (22) coupled to the actuating unit (21). The actuating unit (21) drives the claw (22) to operate. A touch control device (3) is configured for outputting a graphical user interface permitting a user to input a plurality of touch control instructions. A processing unit (4) is electrically connected to the grabbing device (2) and the touch control device (3). The processing unit (4) controls the actuating unit (21) according to the plurality of touch control instructions, thereby moving the claw (22) and causing the claw (22) to make a grabbing movement.

## Description

### BACKGROUND OF THE INVENTION

### 1. Field of the Invention

The present disclosure relates to a touch control type object grabbing machine and, more particularly, to a touch control type object grabbing machine.

### 2. Description of the Related Art

Conventional object grabbing machines permit a user to grab objects by controlling a claw. Taking a doll grabbing machine as an example, the doll grabbing machine generally includes a body including a chamber in an upper portion thereof. A sliding rod unit is mounted in the chamber and includes a claw. An operating portion is disposed on a lower portion of the body and includes a joystick and a button. An example of the doll grabbing machine is disclosed in Taiwan Utility Model No. M415731 entitled "IMPROVED TRACK STRUCTURE OF AN AMUSEMENT MACHINE".

A user can hold the joystick and apply a force with the wrist to move the joystick in a direction. The claw can be controlled to continuously move inch by inch in the direction. When the claw reaches an appropriate position, the button can be pressed to lower the claw for grabbing an object in the chamber. Then, the claw is lifted and moved to a position above an opening. If an object is grabbed by the claw, the object will fall through the opening to a hatch at a lower end of the body.

In the conventional object grabbing machine, control of the speed and direction of the claw is based on the magnitude and the angle of the movement of the joystick. Since the position where the claw descends is critical to the success of grabbing the object, the user has to use many fingers of the hand holding the joystick. However, it is difficult to use the joystick to precisely control the magnitude of the movement of the claw. When the user intends to adjust the position of the claw, the claw must be moved inch by inch and cannot reach the desired position by a single movement, which ruins the mood. Furthermore, the joystick is moved different times in different directions, such that the control precision becomes poor, adversely affecting the hand feeling while maneuvering the joystick.

Thus, a need exists for improvement to poor maneuverability of the joystick in the prior art, meeting the practical need and increasing the utility.

### SUMMARY OF THE INVENTION

An objective of the present disclosure is to provide an object grabbing machine with good maneuverability.

A touch control type object grabbing machine according to the present disclosure includes a housing having a chamber. A grabbing device is mounted in the chamber. The grabbing device includes an actuating unit and a claw coupled to the actuating unit. The actuating unit drives the claw to operate. A touch control device is configured for outputting a graphical user interface permitting a user to input a plurality of touch control instructions. A processing unit is electrically connected to the grabbing device and the touch control device. The processing unit controls the actuating unit according to the plurality of touch control instructions, thereby moving the claw and causing the claw to make a grabbing movement.

The touch control device can include a human-machine interface. The graphical user interface is outputted by the touch control device to the human-machine interface and permits the user to input at least one moving instruction and a grabbing instruction. The actuating unit generates at least one moving signal based on the at least one moving instruction and generates a grabbing signal based on the grabbing instruction. The at least one moving instruction can be generated according to a moving trajectory of the user contacting the human-machine interface, thereby generating the at least one moving signal. The claw can be controlled by the processing unit through the actuating unit to move horizontally according to the moving trajectory. The graphical user interface can include a plurality of horizontal movement icons. The at least one moving instruction is that the user touches one of the plurality of horizontal movement icons to define a moving direction, thereby serving as the at least one moving signal. The claw can be controlled by the processing unit through the actuating unit based on the at least one moving signal to move contiguously and horizontally in the moving direction. The graphical user interface can include a grabbing icon. The grabbing instruction is that the user touches or double clicks the grabbing icon, thereby generating the grabbing signal. The claw can be controlled by the processing unit through the actuating unit based on the grabbing signal to move in a vertical direction and to make the grabbing movement.

The processing unit can be electrically connected to a wireless communication transceiver, at least one image pickup element, a broadcasting device electrically connected to the processing unit, and a lighting module electrically connected to the processing unit. A wall delimiting the chamber can include an opening in communication with a hatch. The wireless communication transceiver sends the processing record of the processing unit or the image picked by the image pickup element to a remote device, such as a cloud server or a mobile operational device. The processing record or the image can be used as a reference for decision making by related personnel. The wireless communication transceiver also permits the remote device to send parameters to the processing unit for updating the control program or the parameters of the processing unit, reducing the time and human labor for updating information.

Thus, the user can use a single-point touch (such as by using a finger) to intuitively, sensitively, and significantly change the position of the claw in the chamber, which is an easy way of changing the position (the object moves when the finger slides). Furthermore, the position of the claw can be slightly moved by point tapping, thereby controlling the vertical movement of the claw and generating the grabbing movement of the claw. As a result, the above embodiment of the present disclosure achieves easy control and increases maneuvering sensitivity. When used in amusement, the disadvantage of poor maneuverability of conventional joystick type game machines can be mitigated, such that users with stiff fingers (such as users with incomplete fingers or mental retardation) can have fun with grabbing objects, further increasing the demand.

### BRIEF DESCRIPTION OF THE DRAWINGS

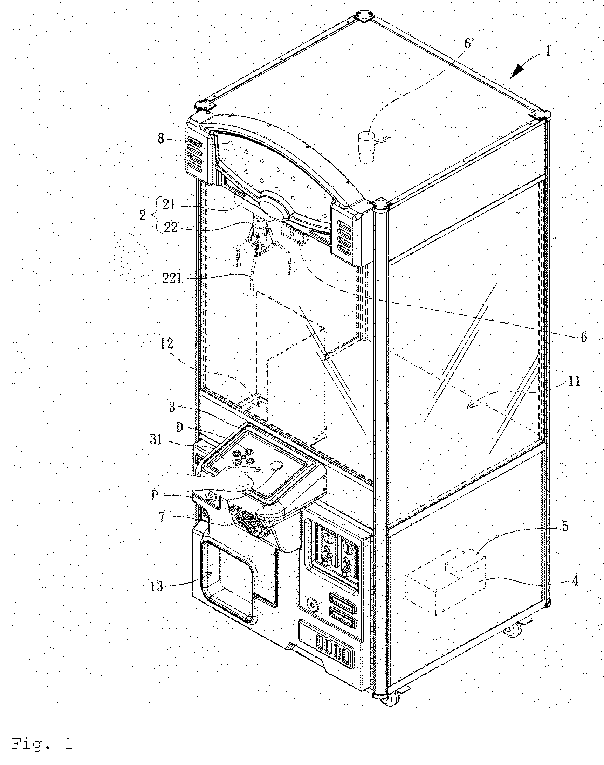

The sole figure shows a perspective view of an embodiment of a touch control type object grabbing machine according to the present disclosure.

### DETAILED DESCRIPTION OF THE INVENTION

The present disclosure will become clearer in light of the following detailed description of illustrative embodiments of this disclosure described in connection with the drawings.

When the terms "front", "rear", "left", "right", "up", "down", "inner", "outer", "side", "horizontal", and similar terms are used herein, it should be understood that these terms have reference only to the structure shown in the drawings as it would appear to a person viewing the drawings and are utilized only to facilitate describing the disclosure, rather than restricting the disclosure.

The term "touch control" as used herein refers to the touch behavior of a user using a limb or a tool to touch a human-machine interface of a touch screen, such as tapping or sliding, and the touch screen generates a control signal based on the touch behavior. For example, the positional coordinate and the time of tapping or sliding (see the figure) are used to control the behavior of a controlled object, such as controlling movement of a claw, which can be appreciated by a person having ordinary skill in the art.

The sole figure shows a perspective view of an embodiment of a touch control type object grabbing machine according to the present disclosure. The touch control type object grabbing machine includes a housing 1, a grabbing device 2, a touch control device 3, and a processing unit 4. The grabbing device 2 is mounted in the housing 1. The grabbing device 2 and the touch control device 3 are electrically connected to the processing unit 4, such that a user can use touch control to grab an object in the housing 1, such as a doll, an ornament, an electric product, or other objects.

In this embodiment, the housing 1 can be of a structure of any conventional object grabbing machine. The housing 1 includes a chamber 11 for receiving the grabbing device 2. The grabbing device 2 includes an actuating unit 21 and a claw 22 coupled to the actuating unit 21. The actuating unit 21 can be a device capable of converting electric energy into power for operating the claw 22 to grab the object in the chamber 11. The touch control device 3 can be any electronic device with touch control functions, such as a touch panel. The touch control device 3 is used to output a graphical user interface (GUI), permitting the user to input a plurality of touch control instructions, such as moving instructions and a grabbing instruction. A moving signal can be generated according to a moving instruction. A grabbing signal can be generated according to the grabbing instruction. The processing unit 4 can be any electronic device including functions of storing data, operation, and generating signals, such as a programmable logic controller (PLC), a digital signal processor (DSP), a micro control unit (MCU), or a circuit board including the above-mentioned functions. The processing unit 4 is electrically connected to the grabbing device 2 and the touch control device 3. The processing unit 4 can execute a control program and can store the data or parameters required. The processing unit 4 controls the actuating unit 21 according to the touch control instructions, thereby moving the claw 22 and causing the claw 22 to make a grabbing movement. For example, the moving signal controls the claw 22 to move horizontally. The grabbing signal controls the claw 22 to move (descend and ascend) in a vertical direction and to make the grabbing movement (such as opening and closing the legs 221 of the claw 22 for grabbing an object). A non-restrictive example of operating the touch control type object grabbing machine will now be set forth.

In the embodiment shown in figure, the touch control type object grabbing machine is for amusement. A wall delimiting the chamber 11 of the housing 1 includes an opening 12 in communication with a hatch 13 through which the user can obtain the object that has fallen through the opening 12. The way the actuating unit 21 of the grabbing device 2 drives the claw 22 can be appreciated by a person having ordinary skill in the art. For example, the actuating unit 21 includes a plurality of guiding rods (such as rectilinear guiding rods or screw rods) mounted to a higher portion of the chamber 11. The guiding rods can guide the moving trajectory of a sliding track device. The claw 22 is fixed to the sliding track device via a base. The claw 22 can be driven by at least one power element (such as a motor). For example, the sliding track device can be actuated to move the claw 22 horizontally in the chamber 11. Furthermore, a cord can be used to move the claw 22 in a vertical direction, and follower members (such as pivotal members) can be used to permit opening and closing of the legs 221 of the claw 22 for grabbing and moving an object in the chamber 11 to a position above the opening 12 through which the object can fall. However, other provisions can be used.

In the embodiment shown in the figure, the touch control device 3 is mounted to an outer face of the housing 1, such as the front side or a lateral side of the housing 1. The graphical user interface is outputted by the touch control device 3 to a human-machine interface 31 which permits the user to contact different sections of the graphical user interface for inputting the moving instruction and the grabbing instruction. For example, the moving instruction can be a moving trajectory (i.e., the touch control trajectory) in the form of a single contact point resulting from the user contacting the human-machine interface 31 with a finger or a pen. The variance value of the moving trajectory in a two-dimensional coordinate system (i.e., the coordinate value of the horizontal movement) can be used to generate the moving signal. The claw 22 is controlled by the processing unit 4 through the actuating unit 21 to move horizontally according to the moving trajectory. The relation between the operation trajectory of the claw 22 (such as the parameters for operation of the guiding rods, the sliding track device, or the motor) and the touch control trajectory (such as the parameters of the finger movement) can be found by the processing unit 4 according to coordinate conversion or using a lookup table, which can be appreciated by a person having ordinary skill in the art. Thus, the user can use a single-point touch to intuitively, sensitively, and significantly change the position of the claw 22 in the chamber 11, which is an easy way of changing the location (the object moves when the finger slides), such as turning, circling, swerving, and moving straight. However, the present disclosure is not limited to this example.

Furthermore, the graphical user interface includes a plurality of horizontal movement (such as up, down, left, right) icons D that can be located in the same area or different corners of the graphical user interface. The moving instruction is that the user touches one of the horizontal movement icons D to define a moving direction, thereby serving as the moving signal. The claw 22 is controlled by the processing unit 4 through the actuating unit 21 based on the moving signal to move continuously and horizontally in the moving direction. For example, the user touches the "right" icon for 0.1 second to control minor rightward movement of the claw 22, thereby achieving slight adjustment of the position of the claw 22.

Furthermore, the graphical user interface includes a grabbing icon P. The grabbing instruction is that the user touches or double clicks the grabbing icon P, thereby generating the grabbing signal. The claw 22 is controlled by the processing unit 4 through the actuating unit 21 based on the grabbing signal to move in the vertical direction and to make the grabbing movement. For example, the claw 22 firstly descends through a height, and the legs 221 of the claw 22 move from an open position to a closed position. Then, the claw 22 ascends through the height and moves to a predetermined position right above the opening 12, and the legs 221 of the claw 22 move from the closed position to the open position, such that the object grabbed by the claw 22 falls through the opening 12. However, the present disclosure is not limited to this example.

In the embodiment shown in the figure in which the touch control type object grabbing machine is used for amusement, the processing unit 4 can be electrically connected to a wireless communication transceiver 5, at least one image pickup element 6, 6', a broadcasting device 7, and a lighting module 8. The wireless communication transceiver 5 can be a transceiver with wireless communication functions, such as functions of a blue-tooth, IEEE802.11, and/or long-term evolution (LTE). The image pickup element 6, 6' can be a digital image pickup element. The broadcasting device 7 can be a speaker. The lighting module 8 can be a multi-color light-emitting diode or a panel. The wireless communication transceiver 5 sends the processing record of the processing unit 4 or the image picked by the image pickup element 6, 6' to a remote device, such as a cloud server or a mobile operational device. The processing record or the image can be used as a reference for decision making by related personnel. The wireless communication transceiver 5 also permits the remote device to send parameters to the processing unit 4 for updating the control program or the parameters of the processing unit 4, such as the operational pattern of the actuating unit 21, the claw 22, the broadcasting device 7 and the lighting module 8, reducing the time and human labor for updating information. However, the present disclosure is not limited to this example.

Thus, the user can use a single-point touch (such as by using a finger) to intuitively, sensitively, and significantly change the position of the claw 22 in the chamber 11, which is an easy way of changing the position (the object moves when the finger slides). Furthermore, the position of the claw 22 can be slightly moved by point tapping, thereby controlling the vertical movement of the claw 22 and generating the grabbing movement of the claw 22. As a result, the above embodiment of the present disclosure achieves easy control and increases maneuvering sensitivity. When used in amusement, the disadvantage of poor maneuverability of conventional joystick type game machines can be mitigated, such that users with stiff fingers (such as users with incomplete fingers or mental retardation) can have fun with grabbing objects, further increasing the demand.

## Claims

1. A touch control type object grabbing machine comprising:
a housing (1) including a chamber (11); and
a grabbing device (2) mounted in the chamber (11), wherein the grabbing device (2) comprises an actuating unit (21) and a claw (22) coupled to the actuating unit (21), and wherein the actuating unit (21) drives the claw (22) to operate;
wherein the touch control type object grabbing machine is **characterized in** further comprising:
a touch control device (3) configured for outputting a graphical user interface permitting a user to input a plurality of touch control instructions; and
a processing unit (4) electrically connected to the grabbing device (2) and the touch control device (3), wherein the processing unit (4) controls the actuating unit (21) according to the plurality of touch control instructions, thereby moving the claw (22) and causing the claw (22) to make a grabbing movement.

2. The touch control type object grabbing machine as claimed in claim 1, **characterized in that** the touch control device (3) comprises a human-machine interface (31), wherein the graphical user interface is outputted by the touch control device (3) to the human-machine interface (31) and permits the user to input at least one moving instruction and a grabbing instruction, wherein the actuating unit (21) generates at least one moving signal based on the at least one moving instruction and generates a grabbing signal based on the grabbing instruction.

3. The touch control type object grabbing machine as claimed in claim 2, **characterized in that** the at least one moving instruction is generated according to a moving trajectory of the user contacting the human-machine interface (31), thereby generating the at least one moving signal, and wherein the claw (22) is controlled by the processing unit (4) through the actuating unit (21) to move horizontally according to the moving trajectory.

4. The touch control type object grabbing machine as claimed in claim 2, **characterized in that** the graphical user interface comprises a plurality of horizontal movement icons (D), wherein the at least one moving instruction is that the user touches one of the plurality of horizontal movement icons (D) to define a moving direction, thereby serving as the at least one moving signal, and wherein the claw (22) is controlled by the processing unit (4) through the actuating unit (21) based on the at least one moving signal to move contiguously and horizontally in the moving direction.

5. The touch control type object grabbing machine as claimed in claim 2, **characterized in that** the graphical user interface comprises a grabbing icon, wherein the grabbing instruction is that the user touches or double clicks the grabbing icon, thereby generating the grabbing signal, and wherein the claw (22) is controlled by the processing unit (4) through the actuating unit (21) based on the grabbing signal to move in a vertical direction and to make the grabbing movement.

6. The touch control type object grabbing machine as claimed in claim 1, **characterized in** further comprising a wireless communication transceiver (5) electrically connected to the processing unit (4).

7. The touch control type object grabbing machine as claimed in claim 1, **characterized in** further comprising at least one image pickup element (6, 6') electrically connected to the processing unit (4).

8. The touch control type object grabbing machine as claimed in claim 1, **characterized in** further comprising a broadcasting device (6) electrically connected to the processing unit (4).

9. The touch control type object grabbing machine as claimed in claim 1, **characterized in** further comprising a lighting module (8) electrically connected to the processing unit (4).

10. The touch control type object grabbing machine as claimed in claim 1, **characterized in that** a wall delimiting the chamber (11) includes an opening (12) in communication with a hatch (13).

## Amended claims

### Amended claims in accordance with Rule 137(2) EPC.

1. A touch control type object grabbing machine comprising:
a housing (1) including a chamber (11); and
a grabbing device (2) mounted in the chamber (11), wherein the grabbing device (2) comprises an actuating unit (21) and a claw (22) coupled to the actuating unit (21), and wherein the actuating unit (21) drives the claw (22) to operate;
a touch control device (3) configured for outputting a graphical user interface permitting a user to input a plurality of touch control instructions; and
a processing unit (4) electrically connected to the grabbing device (2) and the touch control device (3), wherein the processing unit (4) controls the actuating unit (21) according to the plurality of touch control instructions, thereby moving the claw (22) and causing the claw (22) to make a grabbing movement,
wherein the touch control device (3) comprises a human-machine interface (31), wherein the graphical user interface is outputted by the touch control device (3) to the human-machine interface (31) and permits the user to input at least one moving instruction and a grabbing instruction, wherein the actuating unit (21) generates at least one moving signal based on the at least one moving instruction and generates a grabbing signal based on the grabbing instruction,
**characterized in that**
the at least one moving instruction is generated according to a moving trajectory of a finger of the user contacting the human-machine interface (31), thereby generating the at least one moving signal, and wherein the claw (22) is controlled by the processing unit (4) through the actuating unit (21) to move horizontally according to the moving trajectory,
wherein the graphical user interface comprises a plurality of horizontal movement icons (D) corresponding to forward movement, rearward movement, leftward movement and rightward movement of the claw (22), wherein when the user touches one of the plurality of horizontal movement icons (D), the claw (22) is controlled by the processing unit (4) through the actuating unit (21) to move continuously and horizontally in the forward, rearward, leftward or rightward direction corresponding to which one of the plurality of horizontal movement icons (D) is touched by the user and the touching duration.

2. The touch control type object grabbing machine as claimed in claim 1, **characterized in that** the graphical user interface comprises a grabbing icon, wherein the grabbing instruction is that the user touches or double clicks the grabbing icon, thereby generating the grabbing signal, and wherein the claw (22) is controlled by the processing unit (4) through the actuating unit (21) based on the grabbing signal to move in a vertical direction and to make the grabbing movement.

3. The touch control type object grabbing machine as claimed in claim 1, **characterized in** further comprising a wireless communication transceiver (5) electrically connected to the processing unit (4).

4. The touch control type object grabbing machine as claimed in claim 1, **characterized in** further comprising at least one image pickup element (6, 6') electrically connected to the processing unit (4).

5. The touch control type object grabbing machine as claimed in claim 1, **characterized in** further comprising a broadcasting device (6) electrically connected to the processing unit (4).

6. The touch control type object grabbing machine as claimed in claim 1, **characterized in** further comprising a lighting module (8) electrically connected to the processing unit (4).

7. The touch control type object grabbing machine as claimed in claim 1, **characterized in that** a wall delimiting the chamber (11) includes an opening (12) in communication with a hatch (13).
